# FASCICULE DE BREVET EUROPEEN

(11) **EP 0 511 080 B1**
(45) Date de publication et mention de la délivrance du brevet: **18.09.1996**
(21) Numéro de dépôt: 92401121.6
(22) Date de dépôt: 21.04.1992
(51) Int. Cl.: G02F 1/35, C08G 77/04, C08G 83/00, C08L 83/00

(54) **Matériau sol-gel inorganique ayant une susceptibilité du second ordre**
Anorganisches Sol-Gel-Material mit einer Suskeptibilität zweiter Ordnung
Anorganic sol-gel material having a second order susceptibility

(30) Priorité: 22.04.1991 FR 9104924
(43) Date de publication de la demande: 28.10.1992
(73) Titulaire: FRANCE TELECOM, 75015 Paris (FR); CENTRE NATIONAL DE LA RECHERCHE SCIENTIFIQUE, 75007 Paris (FR)
(72) Inventeur: Zyss, Joseph, 92330 Sceaux (FR); Ledoux, Isabelle, F-75116 Paris (FR); Puccetti, Germain, F-57550 Falk (FR); Livage, Jacques, F-91440 Bures sur Yvette (FR); Griesmar, Pascal, F-75010 Paris (FR); Sanchez, Clément, F-91190 Gif sur Yvette (FR)
(74) Mandataire: Warcoin, Jacques

(56) Documents cités:
- EP-A- 0 287 093
- EP-A- 0 304 051
- WO-A-88/02131
- OPTICAL ENGENEERING vol. 26, no. 2, Février 1987, pages 102 - 106; H.NASU ET J. D.MACKENZIE: 'nonlinear optical properties of glasses and glas- or gel-based composites'
- PROCEEDINGS OF SPIE vol. 824, 20 Août 1987, SAN DIEGO CA pages 2 - 6; SOLOMON MUSIKANT EDITOR: 'advances in nonlinear polymers and inorganic crystals, liquid crystals, and laser media;w.r.tomkin et r.w.boyd;nonlinear optical interactions in low-melting-temperature glasses containing organic dyes'
- JOURNAL OF THE OPTICAL SOCIETY OF AMERICA vol. 4, no. 6, Juin 1987, pages 1030 - 1034; W.R.TOMKIN ET AL: 'nonlinear-optical properties of lead-tin fluorophosphate glass containing acridine dyes'
- CHEMICAL ABSTRACTS, vol. 116, no. 14, 6 Avril 1992, Columbus, Ohio, US; abstract no. 139327U, Y. ZHANG ET AL: 'sol-gel processed novel multicomponent inorganic oxide:organic polymer composites for nonlinear optics'

## Description

La présente invention concerne la réalisation d'un matériau ayant une susceptibilité du second ordre constitué d'une matrice inorganique, transparente, dans laquelle sont incluses des molécules organiques possédant des propriétés optiques non-linéaires. Elle concerne également des procédés permettant d'obtenir lesdits matériaux et également les applications auxquelles ces matériaux sont destinés.

L'orientation dans une direction donnée, sous l'action d'un champ électrique, des molécules organiques possédant des propriétés optiques non-linéaires qui sont connues également sous l'abréviation ONLAOM (en anglais : Optically Non Linear Active Organic Molecules), crée une susceptibilité du second ordre χ₂ permettant d'envisager l'utilisation de cette propriété dans les diverses applications issues de l'interaction d'un rayonnement avec ladite susceptibilité électrique χ₂ : génération de seconde harmonique, effet électro-optique (Pöckels), amplification paramétrique optique et contrôle de l'anisotropie du χ₃.

Le fait de pouvoir orienter les ONLAOM sous champ électrique ouvre également des possibilités d'application dans le domaine de l'optique linéaire (dichroïsme).

En particulier, la seconde harmonique est générée lors de l'orientation des molécules organiques optiquement non-linéaires sous l'action d'un champ électrique.

Si la troisième harmonique est aisément générée (χ₃) dans des matrices inorganiques contenant des ONLAOM du fait qu'elle ne nécessite pas d'orientation préférentielle des ONLAOM et qu'elle peut facilement s'accomoder des matrices habituellement amorphes, (cf., par exemple. P.N. Prasad, B.A. Reinhart, Chem. Mat., 2, 660, 1990), il n'en est pas de même de la seconde harmonique χ₂ qui nécessite l'orientation des molécules optiquement non-linéaires précitées.

En effet, les charges généralement présentes dans les matrices inorganiques rendent inopérantes les forts champs électriques nécessaires à l'orientation des ONLAOM lors de la formation du matériau et, de ce fait, conduisent à des matériaux inactifs de ce point de vue.

L'orientation des dipôles optiquement non-linéaires au sein d'un solvant ou d'un polymère organique a déjà été abondamment utilisée et décrite dans la littérature : J.L. Oudar, H. Le Person, Opt., Commun, 15. 258, 1976 et K.D. Singer, M.G. Kuzyk, J.E. Sohn, J. Opt. Ann. B. 4. 968. 1987.

La demande de brevet WO-A-88/02131 décrit des matrices à base de SiO₂ dans lesquelles ont été inclues des substances organiques possédant des propriétés optiques non linéaires qui sont orientables lors de l'étirage par application d'un champ électrique approprié.

La demande de brevet EP-A-287 093 décrit également une matrice de verre comportant des molécules possédant des propriétés optiques non linéaires qui sont orientées sous l'action d'un champ électrique en phase fondue.

L'invention concerne, en premier lieu, de nouveaux matériaux sol-gel ayant une susceptibilité du second ordre χ₂, transparents, constitués d'une matrice inorganique contenant des molécules organiques possédant des propriétés optiques non-linéaires (ONLAOM), orientées dans une direction préférentielle.

Plusieurs molécules d'ONLAOM différentes peuvent être présentes dans ledit matériau.

La distribution des molécules dans le matériau fait que leur direction moyenne est sensiblement perpendiculaire au plan du matériau.

Les matériaux sol-gel selon l'invention peuvent être élaborés sous forme de films transparents allant approximativement de 1 000 Å à plusieurs mm. Ces matériaux sont de plus adaptés à la réalisation de multicouches.

De manière générale, la matrice inorganique est formée d'un enchaînement linéaire ou cyclique répondant à la structure : 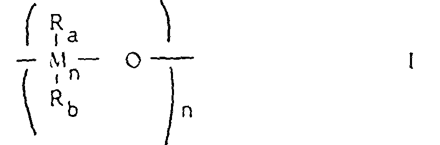 dans laquelle :
Mₙ est l'atome de germanium, de silicium ou d'étain (Mₙ étant identique ou différent),
Rₐ, R_{b}, identiques ou différents, sont un atome d'hydrogène, un radical hydrocarbyle, hydrocarbyloxy, un radical -O- ONLAOM, un radical hydrocarbyle substitué par une ou plusieurs molécules d'ONLAOM;
ou à la structure : 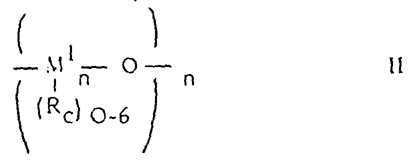 dans laquelle :
M¹ₙ est un élément de transition d ou un élément p ou un élément de transition f (M¹ₙ étant identique ou différent),
R_{c} identique ou différent est un radical hydrocarbyloxy ou un radical -O- ONLAOM
ou le matériau est formé d'un enchaînement aléatoire des structures I et II.

Les groupes terminaux dépendent des précurseurs impliqués dans le procédé de préparation.

Il doit être bien entendu qu'il s'agit d'une définition générale qui n'a pas pour but d'indiquer à l'homme de métier de manière stricte les matrices sol-gel transparentes utilisables. D'autres matrices sol-gel remplissant la même fonction en vue de la réalisation de l'invention peuvent être utilisées.

Par "groupe hydrocarbyle" on entend désigner un groupe carboacyclique (aliphatique) linéaire ou ramifié comportant notamment de 1 à 24 atomes de carbone, de préférence 1 à 6 atomes de carbone, une à cinq insaturations éthyléniques ou acétyléniques. Parmi ces insaturations, on préfèrera particulièrement les insaturations polymérisables telles que les doubles liaisons acryliques, méthacryliques, ou substituées par un radical phényle (styrène). Ces groupes peuvent être éventuellement substitués par un ou plusieurs groupements Z, identiques ou différents choisis parmi les atomes d'halogène, les radicaux hydroxy, alcoxy, alkylthio, haloalcoxy, haloalkylthio, aryle. On entend également désigner les groupes où les atomes d'hydrogène ont été remplacés par des atomes de fluor (fluorocarbone).

Par "groupe hydrocarbyle" on entend également désigner les groupes carbocycliques ou hétérocycliques choisis parmi un système monocyclique aromatique ou non aromatique, un système bicyclique aromatique ou non aromatique, un système polycyclique aromatique ou non aromatique, un système ponté. Ces groupes sont substitués de la même manière que précédemment avec en plus les substituants alkyle et peuvent comporter également des insaturations éthyléniques aracétyléniques de préférence polymérisables.

De préférence, le métal est choisi parmi le silicium, le germanium et l'étain.

De préférence encore, le matériau contient entre 1 et 20 % en poids des molécules organiques possédant des propriétés optiques non-linéaires par rapport à la matière inorganique.

On doit donc noter au vu de la description ci-dessus que les molécules d'ONLAOM contenues dans le gel peuvent être soit noyées dans celui-ci, maintenues par la structure du polymère sol-gel et/ou greffées au squelette du gel par une liaison covalente ou par une liaison de coordination via une fonction complexante éventuellement. La liaison covalente est appropriée pour les liaisons du type Si-C, Sn-C, Ge-C alors que dans le cas des éléments de transition d, f ou de l'aluminium, une fonction complexante sera utilisée.

Le matériau est encore caractérisé en ce qu'il est susceptible d'être obtenu selon le procédé suivant :
on met en contact :
a) un précurseur métallique choisi parmi les alcoxydes métalliques ou les alcoxydes métalliques modifiés par une molécule d'ONLAOM ou un mélange de ceux-ci,
b) une solution hydrolysante permettant la polymérisation du précurseur, dans des conditions non ioniques (non basiques, non acides).
c) un modificateur chimique permettant de contrôler la réactivité du précurseur,
d) éventuellement des agents complexants ou des agents de greffage,
e) des molécules organiques possédant des propriétés optiques non-linéaires (ONLAOM) lorsqu'on n'utilise pas des alcoxydes métalliques modifiés par une molécule d'ONLAOM et éventuellement des ONLAOM lorsqu'on utilise lesdits alcoxydes modifiés,
et en ce que durant au moins une partie du processus de polymérisation du réseau inorganique et/ou de séchage, ou après le séchage lors d'un cycle de chauffage et de refroidissement, on applique un champ électrique.

Les précurseurs répondent généralement à la formule

M(OR₁)_{4-a-b}RₐR_{b}

M étant un atome de silicium, de germanium ou d'étain,
Rₐ, R_{b} ayant l'une des significations de Rₐ ou R_{b} précitées,
OR₁ étant un radical hydrocarbyloxy identique ou différent et étant le radical permettant de former le réseau du gel,
et/ou à la formule :

M¹ ₙ(OR₁)ₘ₋ₓR_{dx}

M¹ₙ étant un élément de transition d ou un élément p ou un élément de transition f,
R_{d} ayant l'une des significations de R_{c} ou étant l'atome de chlore ou de brome,
m est la valence du métal allant de 2 à 6 et x variant de 0 à m, OR₁ a la même signification que précédemment.

Comme précurseurs on peut citer à titre d'exemple Si(OMe)₄, Zr(OnPr)₄, SiHMe(OEt)₂, Ti(OBu)₄, Al(OBu)₂ (ETAC), ETAC étant le groupe acétoacétique ester chélate.

Les molécules organiques possédant des propriétés optiques non-linéaires (ONLAOM) sont bien connues de l'homme de métier. On en trouve, par exemple, une description détaillée dans les publications suivantes : DS Chemla et S-Zogo : Nuclear Optical Properties of Molecules and Crystals, Academic Press 1987

De façon générale, elles répondent à la structure suivante : 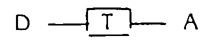 dans laquelle :
D est un substituant électron donneur - base de Lewis,
A est un substituant électron attracteur - acide de Lewis,
T est un système permettant de transmettre les électrons.

Le système donneur/accepteur est non-centrosymétrique dans sa plus grande généralité compatible avec l'existence d'un β//O. La molécule peut ainsi avoir non seulement un transfert de charge de symétrie axiale unidimensionnelle (1-D) mais aussi de symétrie bi ou tridimensionnelle, ainsi que toutes les situations intermédiaires.

Dans ce qui va suivre R et R' désignent des substituants hydrocarbonés linéaires, ramifiés ou cycliques, saturés ou insaturés, pouvant contenir des unités aromatiques, comportant éventuellement des hétéroatomes (O, N, S ...) constituants de groupements fontionnels annexes (alcools, amines, acides ...).

### - Nature de T :

- Liaisons saturées (hybridation sp³) : 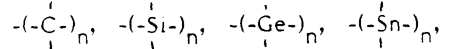
   -(-S-)ₙ, -(-Se-)ₙ, -(-M-)ₙ, etc. où M désigne un atome métallique et toute combinaison entre atomes de carbone et d'hétéroatomes ou d'hétéroatomes entre eux, faisant intervenir une hybridation sp³.
- Liaisons insaturées : hybridation sp²) :
   -C=C-, -N=N-, -CR=B-, CR=N-NR (hydrazones), -CR=N-N=CR (benzalines) ou B= N, P, et plus généralement tout ensemble de doubles liaisons entre atomes de carbone, de carbone et d'hétéroatomes, ou d'hétéroatomes entre eux, faisant intervenir une hybridation sp².

### Hybridation sp :

(-C=C-)ₙ, dérivés d'acétylène, polyynes linéaires ou cycliques et. de façon générale, toute combinaison d'atomes de carbone et d'hétéroatomes, ou d'hétéroatomes entre eux, faisant intervenir une hybridation sp. Et plus généralement toute combinaison de liaisons faisant intervenir ces hybridations sp³, sp² ou sp, comprenant ou non des hétéroatomes.
- Dérivés cycliques :
   aromatiques (tous types d'annulènes) ou non aromatiques, faisant intervenir une alternance de doubles liaisons, comprenant ou non des hétéroatomes dans le cycle, chargés ou non.
- Dérivés polycycliques condensés :
   naphtalène, anthracène, etc.
- Dérivés cycliques non entièrement conjugués, les liaisons insaturées n'intervenant que dans une partie du cycle.
- Toute combinaison des structures précédemment citées, comprenant des liaisons saturées, insaturées, de cycles aromatiques ou non, avec ou sans hétéroatomes. Exemples : phénylhydrazones, benzyldisilanes, benzyldisulfures, polyphényles, polythiophènes, polypyrroles, stilbènes. tolanes. polydiacétylènes, allènes, polysilanes, polygermanes, etc.
- Le transfert de charge peut également être envisagé dans l'espace. par rapprochement des groupes donneur et accepteur dans une conformation appropriée.

Le système T peut également être constitué d'une combinaison des structures précédemment citées, auxquelles on greffe des atomes et plus généralement des substituants divers, donneurs (amines, alcools, silanes ...), accepteurs (cyano, carbonyle et dérivés, nitro, nitroso, pyridinium) d'électrons ou sans influence électronique évidente (alcanes). Exemples :

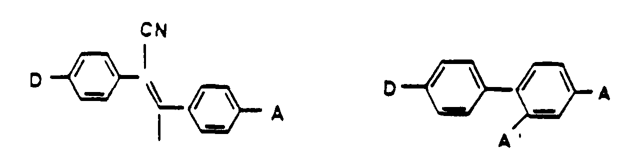

Les substituants D et A sont situés de préférence aux extrémités du système T, mais peuvent aussi être placés en un point quelconque de T selon les propriétés physico-chimiques désirées.

Nature des substituants donneurs d'électrons D (base de Lewis):

D peut être :
un halogène,
A-R où A = O, S, Se,
B-(-RR′) où B = N, P, As
et toute combinaison de ces atomes dans des systèmes linéaires ou ramifiés ou cycliques, aromatiques ou non (benzodithia),
un N-oxyde 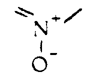 inséré ou non dans un système aromatique, 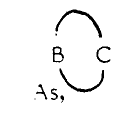 où C=CₙHₙ ou tout autre hydrocarbure alycyclique, et B=N, P ou As,
- O -
- S -
dérivés radicalaires.

Des complexes métalliques à forte densité d'électrons, par exemple le ferrocène et les autres métallocènes, ou des atomes métalliques complexés avec des systèmes cycliques conjugués aromatiques (cyclopentadiényle, benzène) ou non (cyclooctatétraène).

Plus généralement, il s'agit de substituants comportant des paires d'électrons non liants, sur des atomes non métalliques ou métalliques.

Nature des substituants accepteurs d'électrons A (acides de Lewis) : 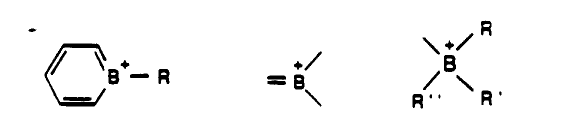 B = N, P, As NO₂, NO (nitroso) 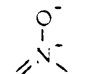 (N-oxyde, aromatique ou non) Sulfones, sulfoxydes, SO₃R (sulfonate)
Dérivés carbonylés : aldéhydes, cétones 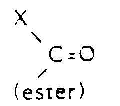 où X = halogène, amine primaire, secondaire, tertiaire, OH, OR Anhydrides d'acides

-CN,

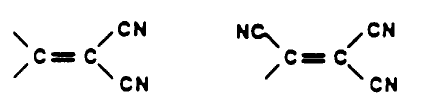

Pyridines et dérivés : tout hétérocyle aromatique comprenant des hétéroatomes et donc nettement accepteur d'électrons.
Hétérocyles non aromatiques du types dithiolthiones et dithiolones, ou leurs équivalents azotés.
Des complexes métalliques M(CO)ₙL où M = Cr, Mo, W ou tout autre métal complexés du type acide de Lewis, et L un ligand mono- ou bidentate.
Des organométalliques du type AIR₃, BR₃, CrR₃ et plus généralement tout système à coordinence insaturée. Systèmes comprenant des atomes hybridés sp (alcynes, dérivés cyanés ...).

De manière générale, toute structure de la forme ;

ONLAOM-L.

où L est un ligand mono-, bi- ou polydentate susceptible de se complexer a la chaîne inorganique constituant le gel, fait partie de l'invention.

Dans le cas des composés à base de silicium ou d'étain les molécules ONL décrites précédemment sont simplement greffées au squelette via une liaison du type

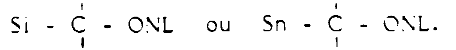

L'hydrolyse peut être effectuée de différentes manières : avec de l'eau pure ou diluée dans un solvant ou dans un mélange de solvants, avec des catalyseurs neutres (non générateur d'espèces chargées) activateurs nucléophiles (diméthylamino pyridine (DMAP), N-méthyl imidazole (Nml), diméthylsulfoxyde (DMSO), diméthylformamide (DMF), tétrahydrofuranne (THF) ...), avec des générateurs d'eau in-situ via une réaction chimique (estérification, décomposition d'alcool tertiaires ...) ou via un contrôle physico-chimique, systèmes micellaires et dérivés.

Les modificateurs chimiques permettent de contrôler la réactivité des précurseurs alcoxydes et de donner naissance à des réseaux inorganiques polymériques souvent associés à la transparence des gels. Par exemple, les acides carboxyliques, les polyacides, les polyols, les anhydrides d'acides organiques, acides aminés, les béta-dicétones et dérivés (béta-cétoester, béta-cétoamines), béta-dithiols et dérivés, les éthers alcools, les aminoalcools, les phosphines alcools, les phosphinates, les phosphonates, les hydroxy acides.

Un mélange de modificateurs peut aussi être utilisé.

Les agents complexants sont des ligands mono ou polydentates D qui modifient les précurseurs au niveau moléculaire pour donner naissance à de nouveaux précurseurs. Un ligand peut être monofonctionel mais polydentate tel que les acétylacétones.

Le champ électrique appliqué durant le procédé donne naissance à une certaine valeur de χ₂ et est adapté à l'orientation souhaitée des molécules. Il est normalement fonction du matériau et est de l'ordre de plusieurs kV/cm.

Les matériaux obtenus par le procédé sol-gel à partir de verres inorganiques (sols, gels, xérogels) fonctionnalisés par des molécules organiques porteuses d'un moment dipolaire et orientables sous champ électrique se prêtent à la réalisation de composants mettant en oeuvre leurs propriétés optiques linéaires et non-linéaires. Les applications de ces composants couvrent un large champ : télécommunications optiques, traitement du signal optique sous forme analogique ou digitale. Ces composants seront basés sur des propriétés optiques linéaires, quadratiques, cubiques ou mixtes (combinaisons utiles de telles propriétés ou de l'une ou plusieurs de ces propriétés avec une ou plusieurs propriétés d'un autre type, cette conjonction intervenant de façon cruciale dans le principe de fonctionnement du dispositif. Les matériaux photoréfractifs et les dispositifs associés illustrent ce dernier point, cf. infra). Ces composants peuvent opérer à des longueurs d'onde (excitation et/ou émission) correspondant au régime paramétrique (non-résonnant), dynamique (résonnant) ou quasi-résonnant, le compromis idéal étant à définir au regard du spectre d'absorption du matériau, de son seuil de dommage et de la distance d'interaction des différents rayonnements. Le matériau non-linéaire pourra être mis en forme selon différentes géométries correspondant à différents procédés de fabrication et de mises en forme.

La nature des matrices sol-gel les rendent aptes au dépôt en couche mince d'épaisseur contrôlée par "spin-coating" en cours de polymérisation ainsi qu'au polissage par les techniques classiques utilisées pour les verres, ce dernier point restant problématique pour la plupart des polymères organiques. On peut aussi les mettre en forme par remplissage de fibres capillaires en solution et gélification ultérieure ou par étirage d'une préforme selon les procédés éprouvés pour les fibres optiques en silice. L'encapsulation des molécules organiques non linaires dans une matrice minérale agit favorablement sur leur stabilité et peut autoriser des traitements thermiques à des températures sensiblement plus élevées que la température de fusion voire de dégradation du matériau organique pur. En outre, la connexité avec les fibres optiques monomodes et multimodes en silice ou en verres fluorés peut être assurée avec une meilleure adaptation d'indice et donc des pertes de couplage plus faibles, que pour des composants à base de matériaux essentiellement différents tels que les semi-conducteurs minéraux et les composés purement organiques.

L'invention a en conséquence pour objet supplémentaire :
- Le matériau massif découpé et poli selon des géométries difficilement accessibles pour les cristaux moléculaires réputés en général plus mous et plus fragiles.
- Les films minces (avec confinement 1-D) orientés dont la direction de confinement est perpendiculaire au substrat.
- Des empilements multiples de films orientés (ou des alternances de couches orientées et non orientées de type "actif-passif" pouvant se prêter, à certaines longueurs d'ondes, au "quasi-accord de phase"). On peut ainsi empiler des couches diversement fonctionnalisées, par exemple de couches photoconductrices ou fluorescentes ou à inversion de population (i.e. couche lasante) alternant avec des couches orientées non linéaires. On pourra également, dans le matériau constituant une couche, mélanger plusieurs types de molécules présentant chacune une ou plusieurs propriétés spécifiques, en vue d'assurer ce caractère multifonctionnel dans un seul dispositif. Le substrat pourra être plan ou usiné par tout moyen technologique adapté (exemple : substrat à surface modifiée en réseau de diffraction avec dépôt de film métallique de façon à localiser à l'interface métal-diélectrique une résonance plasmon ou substrat semiconducteur susceptible d'être porté à un potentiel constant).
- Des guides optiques confinés parallèlement et perpendiculairement au substrat (confinement 2-D) en géométries sillon et ruban.
- Des fibres obtenues par moulage dans un capillaire creux avant un éventuel gainage.
- Des fibres obtenues par étirement à chaud d'une préforme constituée par le matériau sol-gel. L'orientation peut alors être obtenue par application d'un champ.

Les fonctions envisageables pour les composants à base de matrices sol-gel orientés contenant des molécules organiques sont répertoriés dans la suite et font partie de l'invention.

### Composants linéaires

Susceptibilité : χ⁽¹⁾ (-ω;ω), ω fréquence optique située dans le proche U.V., le visible ou le proche I.R.
- polariseurs,
- filtres et réseaux dichroïques,
- plus généralement tout dispositif utilisant la biréfringence d'une couche mince ou d'un guide optique, celle-ci étant principalement déterminée par les propriétés spectroscopiques des molécules incluses ou greffées ainsi que par l'efficacité du "poling".

### Composants quadratiques

Susceptibilité : χ⁽²⁾(-ω_{3,}ω₂,ω₁) toutes les fréquences étant situées dans le domaine spectral précédemment défini, génération de second harmonique
- amplification paramétrique (par exemple répéteur paramétrique à fibre optique pour télécommunication optique),
- émetteur paramétrique,
- oscillateur paramétrique,
- effet électro-optique (cf. ci-après).

Un point commun à ce type de composants est d'exiger, dans un grand nombre de cas, un traitement anti-reflet et/ou dichroïque des faces d'entrées et de sortie de la lumière : le verre sol-gel permet d'une part de s'affranchir de l'encapsulation et d'autre part d'apposer directement sur le matériau actif les couches diélectriques requises par les applications. Les pertes ainsi que les finesses des cavités Fabry-Perrot s'en trouveront respectivement diminuées et accrues.

### Composants électro-optiques

Susceptibilité Pöckels : χ⁽²⁾(-ω ± Ω ; ω ± Ω) est une fréquence optique et Ω une radiofréquence (domaine allant de quelques dizaines de kHz à plusieurs dizaines de GHz)
- Dispositif de déclenche à effet Pöckels du gain laser ("Q-switch") dans une cavité, Ω pouvant alors descendre jusqu'à de très basses fréquences de l'ordre du Hz ou moins.
- Connecteur électrooptique en Y permettant de multiplexer ou de démultiplexer un signal optique en propagation guidée.
- Dispositif de modulation de phase en onde guidée.
- Coupleur directif permettant de relier deux entrées à deux sorties selon la valeur d'un signal de tension électrique de commande.
- Interféromètre de type Machs-Zehnder en ondes guidées pour la modulation d'amplitude d'une porteuse optique.

### Composants photoréfractifs

Le principe de fonctionnement de ce type de composants repose sur la conjonction d'effets électrooptique linéaire et photoconducteur. Tout dispositif photoréfractif mettant en oeuvre, au moins pour la propriété électrooptique, un verre sol-gel orienté et fonctionnalisé par des espèces moléculaires telles que celles précédemment décrites est concerné. Parmi ceux-ci figurent :
- Les couches minces électrooptiques pour modulateur spatial de lumière et leurs applications à la conversion "incohérente-cohérente" de signaux optiques ou d'images ou aux systèmes optiques à réseaux de neurones par exemple. La fonction photoconductrice pourra être assurée par une ou plusieurs couches fonctionnalisées et parallèles à la couche ou aux couches électrooptiques précédemment décrites. La même couche pourra également assurer les deux fonctionnalités, la photoconductivité résultant de la présence de molécules appropriées et/ou de défauts électrodonneurs et électroattracteurs présents naturellement dans le verre ou incorporés pendant le processus de fabrication.
- Tout dispositif de traitement du signal reposant sur un effet photoréfractif tel que le mélange à 2 et 3 ondes pour l'amplification de la lumière, l'holographie en temps réel et la reconnaissance de formes ou d'images. A cet effet, l'invention a également pour objet, à côté de l'insertion et/ou du greffage des molécules ONL décrites plus haut, l'insertion et/ou le greffage d'entités chimiques qui confèrent au matériau un caractère photoconducteur.

### Composants non-linéaires cubiques anisotropes

L'orientation de matériaux cubiques par "poling" n'est pas nécessaire par symétrie pour obtenir un effet χ⁽³⁾. Elle peut toutefois être souhaitable pour :
- Elever la susceptibilité dans la direction de l'orientation, la susceptibilité étant pondérée dans un milieu isotrope par un facteur d'orientation inférieur à l'unité.
- Rendre la propriété anisotrope, le milieu devenant non linéairement biréfringent d'où la possibilité d'accord de phase et d'adressage sélectif en polarisation.

Les molécules incluses ou greffées peuvent être de deux types:
- Les molécules précédemment décrites à finalité a-priori quadratique.
- Des molécules conjuguées centrosymétriques (polyènes, dérivés conjugués cycliques, ou la combinaison des deux comprenant ou non des hétéroatomes, substitués symétriquement en bout de chaîne) auquel un groupement dipolaire aura été rigidement fixé pour permettre l'orientation dipolaire sous champ.

Les composants envisageables couvrent alors l'ensemble des applications liées au tenseur χ⁽³⁾, à savoir :
- Bistabilité optique,
- Modulateur par effet Kerr "électrique",
- Porte ou logique optique par effet Kerr optique (l'indice est alors linéairement dépendant de l'intensité optique à la longueur d'onde de la sonde ou à celle d'un autre faisceau.

Les exemples ci-après illustrent l'invention.

### Exemple 1 - Orientation de molécules optiquement non linéaires insérées dans une matrice sol-gel

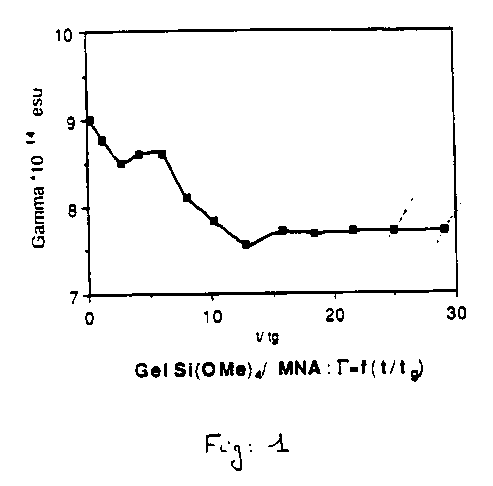

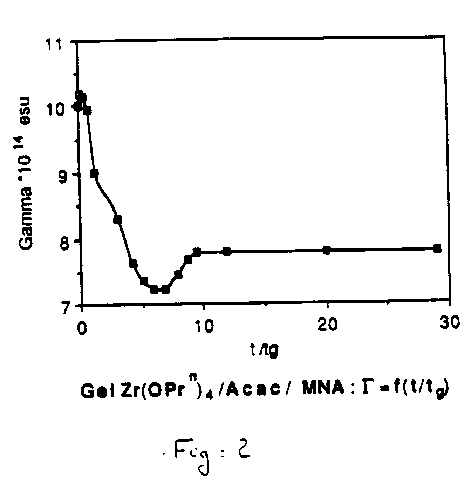

A titre d'exemple, on décrit ci-après l'évolution du signal EFISH (Electrical Field Induced Second Harmonic) mesuré dans un gel à base d'oxyde de silicium dans lequel sont insérées une ou plusieurs molécules organiques possédant des propriétés optiques non linéaires.
a) Un précurseur Si(OMe)₄ (TMOS) est dissous dans une solution de méthanol contenant la molécule optiquement active (par exemple méthyl-4 nitroaniline, MNA) contenant ou non un catalyseur activateur nucléophile (ex: diméthyl-4-amino pyridine, DMAP). Cette première solution est ensuite hydrolysée par ajout d'eau pure ou diluée dans un solvant. Selon les proportions des différents réactifs le temps de gélation peut être ajusté de quelques minutes à quelques jours.
   Sans l'application d'un champ électrique et en absence de de toutes cristallites ces gels ne génèrent pas de seconde harmonique. Par contre un champ électrique de 4 KV/mm est suffisant pour orienter les molécules et donner naissance à une seconde harmonique. L'évolution du signal EFISH en fonction du processus de polymérisation (temps de gel = tg) est représenté sur la figure 1. Aux temps courts la valeur de la susceptiblité macroscopique Γ dans le sol est proche de celle de la molécule organique en solution dans un solvant. Au fur et à mesure que le processus de polymérisation avance, Γ diminue car l'orientation des dipôles est gênée par l'augmentation de la viscosité du matériau. Les différentes transitions observées sont reliées à l'évolution de la texture interne du gel. Une valeur de Γ décroissante mais non nulle est observée tant que le gel reste humide (en présence de solvant). Au cours du séchage du gel, tous les dipôles sont figés ce qui entraîne une valeur minimale de la susceptiblité macroscopique Γ. Elle est alors réduite à la composante purement electronique cubique γ₂ de l'échantillon.
   Les molécules organiques ont été également insérées dans des gels à base d'oxyde d'élément de transition d, transition f, ou des gels à base d'oxyde d'étain, de germanium, d'aluminium ou de bore.
b) Elaboration d'un gel à base de zirconium.
   Un précurseur Zᵣ(OₙPᵣ)₄ est dissous dans une solution de ⁿPrOH contenant la molécule optiquement active (par exemple : méthyl-4 nitroaniline, MNA). On ajoute ensuite un modificateur chimique, l'acétylacétone, afin de diminuer la réactivité du précurseur métallique. On hydrolyse enfin la solution ainsi obtenue à l'aide d'une solution d'eau dissoute dans un solvant ou un mélange de solvants. La molécule optiquement non linéaire peut être également additionnée avec la solution hydrolysante. On peut ajuster le temps de gélation de quelques minutes à quelques heures suivant la concentration en précurseur, le taux d'hydrolyse et la quantité de modificateur chimique. Les résultats obtenus en EFISH sont similaires à ceux obtenus dans le cas du précurseur TMOS (figure 2).

### Exemple 2 - Orientation de molécules optiquement non linéaires greffées sur le squelette inorganique des gels

Ces molécules ont été également greffées sur les squelettes à base d'oxyde via des liaisons soit Si-C soit Sn-C soit pour les autres éléments (transition d, transition f, aluminium ou bore) via des liaisons chimiques du type M-X (où X = O, S, N, P). Bien entendu, les liaisons les plus stables vis à vis de la réaction d'hydrolyse ont été réalisées par l'utilisation d'agents complexants.

Dans le cas d'un précurseur comportant une molécule optiquement active greffée sur le squelette polymérique, on peut citer deux exemples :
a) Un précurseur Si(OMe)₄ (TMOS) est mélangé à du N-(3-triéthoxysilyl-propyl)-2,4 dinitrophénylamine(appelé Si(OEt)₃(N Φ). Le mélange est ensuite dissous dans une solution de méthanol contenant ou non un catalyseur activateur nucléophile (ex: diméthyl-4 amino pyridine, DMAP). Cette première solution est ensuite hydrolysée par ajout d'eau pure ou diluée dans un solvant. Selon les proportions des différents réactifs, le temps de gélation peut être ajusté de quelques minutes à quelques jours. La susceptibilité macroscopique obtenue par application du champ électrique diminue également avec le processus de polymérisation.
b) Un précurseur Zr(OPrⁿ)₄ est dissous dans du ⁿPrOH. On ajoute au mélange ainsi obtenu un modificateur chimique comportant une fonction optiquement non linéaire, par exemple l'acide 4-amino salicylique ou la 4-nitro 2-acétylacétone aniline. On hydrolyse enfin la solution ainsi obtenue à l'aide d'une solution d'eau dissoute dans un solvant ou un mélange de solvants. On peut ajuster le temps de gélation de quelques minutes à quelques heures. La susceptibilité macroscopique obtenue par application du champ électrique Γ diminue également avec le processus de polymérisation.

### Exemple 3

Une mole de précurseur SiHMe(OEt)₂ est dissoute dans un solvant (acétone par exemple) ou dans un mélange de solvants contenant une molécule optiquement non linéaire (le N-(4-nitrophényl)-L-prolinol(NPP)). Cette solution est ensuite hydrolysée. Un second précurseur (ex: Zr(OPrⁿ)₄) est ensuite dissous dans la solution initiale. On obtient une solution colloïdale contenant la molécule optiquement non linéaire.

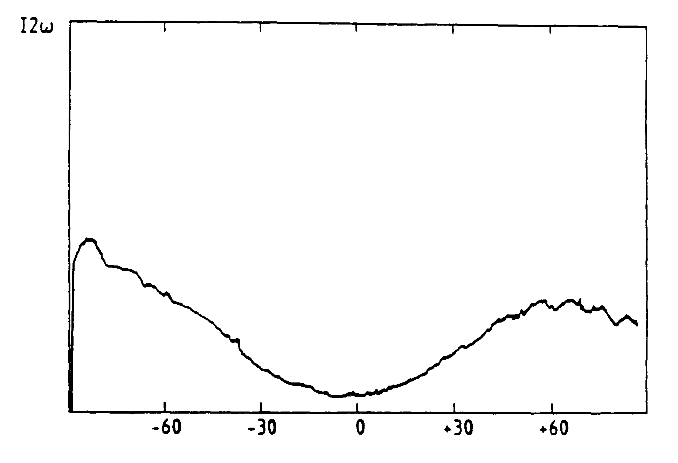

Cette solution colloïdale est déposée sous forme d'un film polissable d'épaisseur variable (1000 Å à plusieurs mm) possédant de bonnes qualités mécaniques et optiques et ne contenant pas de micro-cristallites. Ces films sont polissables. Ce film séché ne présente aucune seconde harmonique. Par contre si un champ électrique d'environ 10 kV/cm est appliqué (aboutissant à un champ local de l'ordre de 100 V/µm) soit au cours du processus de polymérisation et de séchage du film soit en effectuant simultanément un cycle de chauffage et de refroidissement du film formé et poli, un important signal de seconde harmonique est alors mesuré comme le montre la figure 3. Des dépôts successifs de films pôlis peuvent ainsi être réalisés afin d'atteindre des épaisseurs de plusieurs millimètres.
**Fig. 3** : gel d'épaisseur 60 µm dopé par 1% de NPP, 7 jours après poling corona (aiguille placée à 2 cm et portée à 14 KV) à une température de 90°C pendant 30 mn.
La figure montre la réponse de l'échantillon en génération de second harmonique (à 1,06 µm) en configuration p-p (polarisation fondamentale et harmonique dans le plan d'incidence). Le signal est 1400 fois plus faible que celui émis par une lame de quartz.

### Exemple 4

On mélange 3g de 3-methacryloxypropyltrimethoxysilane (0,012 mole), 1,56g de N-[3-(Triéthoxysilyl)propyl]-2,4-dinitrophénylamine, (alcoxyde porteur de la fonction active en optique non linéaire), (0,004 mole) et 0,72g d'eau (0,04 mole) et 40 ml de chlorobenzène. On met le mélange à reflux pendant 12 heures.

On ajoute alors une solution composée de 1,31g de Zr(OPrⁿ)4 (0,004 mole), 0,8g d'acétyl-acétone (0,008 mole) et de 20 ml de chlorobenzène. On maintient un reflux de 2 heures.

On ajoute du 2,2'-Azobis(2-méthylpropionitrile) sous atmosphère d'argon pour catalyser la polymérisation organique (2% en mole par rapport au 3-methacryloxy-propyltrimethoxysilane). On obtient une solution limpide que l'on peut utiliser facilement pour élaborer des films transparents.

## Revendications

1. Matériau sol-gel ayant une susceptibilité du second ordre χ₂, transparent, constitué d'une matrice inorganique contenant des molécules organiques possédant des propriétés optiques non linéaires et dénommées ONLAOM, orientées dans une direction préférentielle, caractérisé en ce que la matrice inorganique est formée d'un enchaînement linéaire ou cyclique répondant à la structure : 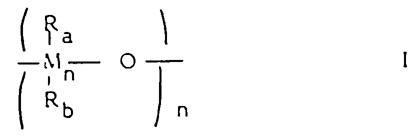 dans laquelle :
Mₙ est l'atome de germanium, de silicium ou d'étain, Mₙ étant identique ou différent,
Rₐ, R_{b}, identiques ou différents, sont un atome d'hydrogène, un radical hydrocarbyle éventuellement substitué, notamment par une double liaison polymérisable, hydrocarbyloxy, un radical -O- ONLAOM, un radical hydrocarbyle substitué par une ou plusieurs molécules d'ONLAOM;
ou à la structure : 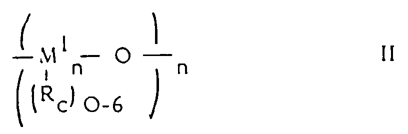 dans laquelle :
M¹ₙ est un élément de transition d ou un élément p ou un élément de transition f, M¹ₙ étant identique ou différent,
R_{c} identique ou différent est un radical hydrocarbyloxy ou un radical -O- ONLAOM
ou le matériau est formé d'un enchaînement aléatoire des structures I et II.

2. Matériau selon la revendication 1, caractérisé en ce que les métaux Mₙ et M¹ₙ choisis parmi le silicium, le germanium et l'étain.

3. Matériau selon l'une des revendications 1 ou 2, caractérisé en ce que les molécules organiques possédant des propriétés optiques non-linéaires, (ONLAOM), répondent à la structure suivante : 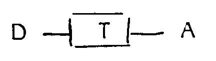 dans laquelle :
D est un substituant électron donneur - base de Lewis,
A est un substituant électron attracteur - acide de Lewis,
T est un système permettant de transmettre les électrons.

4. Matériau selon la revendication 3, caractérisé en ce que le matériau contient entre 1 et 20 % en poids des molécules organiques possédant des propriétés optiques non linéaires par rapport à la matrice inorganique.

5. Matériau selon l'une des revendications 1 à 4, caractérisé en ce qu'il est susceptible d'être obtenu selon le procédé suivant :
on met en contact :
a) un précurseur métallique choisi parmi les alcoxydes métalliques ou les alcoxydes métalliques modifiés par une molécule d'ONLAOM ou un mélange de ceux-ci,
b) une solution hydrolysante permettant la polymérisation du précurseur, dans des conditions non ioniques,
c) un modificateur chimique permettant de contrôler la réactivité du précurseur,
d) éventuellement des agents complexants ou des agents de greffage,
e) des molécules organiques possédant des propriétés optiques non-linéaires (ONLAOM) lorsqu'on n'utilise pas des alcoxydes métalliques modifiés par une molécule d'ONLAOM et éventuellement des ONLAOM lorsqu'on utilise lesdits alcoxydes modifiés,
et en ce que durant au moins une partie du processus de polymérisation du réseau inorganique et/ou de séchage, ou après le séchage lors d'un cycle de chauffage et de refroidissement, on applique un champ électrique.

6. Matériau selon la revendication 5, caractérisé en ce que les précurseurs répondent à la formule :
M(OR₁)_{4-a-b}RₐR_{b}
M étant un atome de silicium, de germanium ou d'étain,
Rₐ, R_{b} ayant l'une des significations selon la revendication 1,
OR₁ étant un radical hydrocarbyloxy identique ou différent et étant le radical permettant de former le réseau du gel,
et/ou à la formule :
M¹ ₙ(OR₁)ₘ₋ₓR_{dx}
M¹ₙ étant un élément de transition d ou un élément p ou un élément de transition f,
R_{d} ayant l'une des significations de R_{c} ou étant l'atome de chlore ou de brome,
m est la valence du métal allant de 2 à 6 et x variant de 0 à m, OR₁ a la même signification que précédemment.

7. Matériau selon la revendication 6, caractérisé en ce que le précurseur est choisi parmi Si(OMe)₄, Zᵣ(OnPᵣ)₄, SiHMe(OEt)₂, Ti(OBu), Al(OBu)₂(ETAC), ETAC étant le groupe acétoacétique ester chélate.

8. Procédé de préparation d'un matériau selon l'une des revendications 1 à 7, caractérisé en ce que l'on met en contact :
a) un précurseur métallique choisi parmi les alcoxydes métalliques ou les alcoxydes métalliques modifiés par une molécule d'ONLAOM ou un mélange de ceux-ci,
b) une solution hydrolysante permettant la polymérisation du précurseur, dans des conditions non ioniques,
c) un modificateur chimique permettant de contrôler la réactivité du précurseur,
d) éventuellement des agents complexants ou des agents de greffage,
e) des molécules organiques possédant des propriétés optiques non-linéaires ONLAOM lorsqu'on n'utilise pas des alcoxydes métalliques modifiés par une molécule d'ONLAOM et éventuellement des ONLAOM lorsqu'on utilise lesdits alcoxydes modifiés,
et en ce que durant au moins une partie du processus de polymérisation du réseau inorganique et/ou de séchage, ou après le séchage lors d'un cycle de chauffage et de refroidissement, on applique un champ électrique.

9. Composants optiques formés à partir de l'un des matériaux selon l'une des revendications I à 7, notamment sous forme de couche mince.

## Patentansprüche

1. Transparentes Sol-Gel-Material mit einer Suszeptibilität zweiter Ordnung χ₂, bestehend aus einer anorganischen Matrix, die organische Moleküle mit nicht-linearen optischen Eigenschaften, sogenannte ONLAOM-Moleküle, enthält, die in einer bevorzugten Richtung orientiert sind, dadurch gekennzeichnet, daß die anorganische Matrix gebildet wird durch lineare oder cyclische Kettenverknüpfung entsprechend der Struktur: 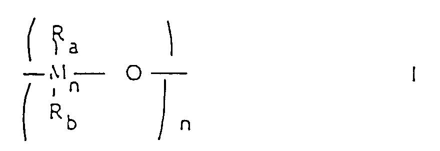 worin bedeuten:
Mₙ ein Germanium-, Silicium- oder Zinnatom, wobei mehrere Reste Mₙ gleich oder verschieden sein können,
Rₐ, R_{b}, die gleich oder verschieden sein können, ein Wasserstoffatom, einen gegebenenfalls substituierten, insbesondere durch eine Doppelbindung polymerisierbaren Hydrocarbylrest, Hydrocarbyloxyrest, -O- ONLAOM-Rest, und Hydrocarbylrest, der durch ein oder mehrere ONLAOM-Moleküle substituiert ist;
oder der Struktur: 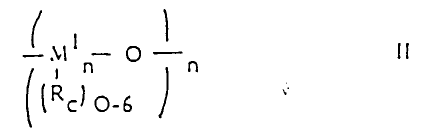 worin bedeuten:
M¹ₙ ein Übergangselement d oder ein Element p oder ein Übergangselement f, wobei mehrere Reste M¹ₙ gleich oder verschieden sein können,
R_{c} einen Hydrocarbyloxyrest oder einen -O- ONLAOM-Rest, wobei mehrere Reste R_{c} gleich oder verschieden sein können,
oder das Material gebildet wird durch zufällige Kettenverknüpfung der Strukturen (I) und (II).

2. Material nach Anspruch 1, dadurch gekennzeichnet, daß die Metalle Mₙ und M¹ₙ ausgewählt werden aus Silicium, Germanium und Zinn.

3. Material nach einem der Ansprüche 1 oder 2_{,} dadurch gekennzeichnet, daß die organischen Moleküle, die nicht-lineare optische Eigenschaften aufweisen, d.h. die ONLAOM-Moleküle, der folgenden Struktur entsprechen 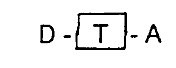 worin bedeuten:
D einen Elektronendonor-Lewis-Basen-Substituenten,
A einen Elektronenakzeptor-Lewis-Säure-Substituenten und
T ein System, das den Transport der Elektronen erlaubt.

4. Material nach Anspruch 3, dadurch gekennzeichnet, daß es 1 bis 20 Gew.-% organische Moleküle mit nicht-linearen optischen Eigenschaften, bezogen auf die anorganische Matrix, enthält.

5. Material nach einem der Ansprüche 1 bis 4, dadurch gekennzeichnet, daß es nach dem folgenden Verfahren erhältlich ist; bei dem man miteinander in Kontakt bringt:
a) einen Metall-Vorläufer, ausgewählt aus den Metallalkoxiden oder den Metallalkoxiden, die durch ein ONLAOM-Molekül modifiziert worden sind, oder einer Mischung derselben,
b) eine hydrolysierende Lösung, welche die Polymerisation des Vorläufers unter nicht-ionischen Bedingungen erlaubt,
c) ein chemisches Modifizierungsmittel, das die Kontrolle (Steuerung) der Reaktionsfähigkeit des Vorläufers erlaubt,
d) gegebenenfalls Komplexbildner oder Aufpfropfungsmittel,
e) organische Moleküle, die nicht-lineare optische Eigenschaften aufweisen, d.h. ONLAOM-Moleküle, wenn man keine Metallalkoxide verwendet, die durch ein ONLAOM-Molekül modifiziert worden sind, und gegebenenfalls ONLAOM-Moleküle, wenn man die genannten modifizierten Alkoxide verwendet, und
mindestens während eines Teils des Ablauf der Polymerisation des anorganischen Gitters (Netzes) und/oder der Trocknung oder nach der Trocknung während eines Erwärmungs- und Abkühlungszyklus ein elektrisches Feld anlegt.

6. Material nach Anspruch 5, dadurch gekennzeichnet, daß die Vorläufer der Formel
M(OR₁)_{4-a-b}RₐR_{b}
worin bedeuten:
M ein Silicium-, Germanium- oder Zinnatom,
Rₐ, R_{b} eine der in Anspruch 1 angegebenen Bedeutungen haben,
OR₁ einen Hydrocarbyloxy-Rest, wobei mehrere OR₁-Reste gleich oder verschieden sein können, und der Rest die Bildung des Gel-Gitters erlaubt,
und/oder der Formel entsprechen:
M¹ ₙ(OR₁)ₘ₋ₓR_{dx}
worin bedeuten:
M¹ₙ ein Übergangselement d oder ein Element p oder ein Übergangselement f,
R_{d} eine der Bedeutungen von R_{c} hat oder für ein Chlor- oder Bromatom steht,
m die Valenz des Metalls, die 2 bis 6 betragen kann, und x von 0 bis m variiert, und
OR₁ die gleiche Bedeutung wie oben hat.

7. Material nach Anspruch 6, dadurch gekennzeichnet, daß der Vorläufer ausgewählt wird aus Si(OMe)₄, Zr(OnPr)₄, SiHMe(OEt)₂, Ti(OBu)₄, Al(OBu)₂(ETAC), wobei ETAC für die Acetoessigsäureester-Chelatgruppe steht.

8. Verfahren zur Herstellung eines Materials nach einem der Ansprüche 1 bis 7_{,} dadurch gekennzeichnet, daß man miteinander in Kontakt bringt
a) einen Metall-Vorläufer, ausgewählt aus den Metallalkoxiden oder den Metallalkoxiden, die durch ein ONLAOM-Molekül modifiziert worden sind, oder einer Mischung davon,
b) eine hydrolysierende Lösung, welche die Polymerisation des Vorläufers unter nicht-ionischen Bedingungen erlaubt,
c) ein chemisches Modifizierungsmittel, das die Kontrolle (Steuerung) der Reaktionsfähigkeit des Vorläufers erlaubt,
d) gegebenenfalls Komplexbildner oder Aufpfropfungsmittel und
e) organische Moleküle, die nicht-lineare optische Eigenschaften aufweisen, d.h. ONLAOM-Moleküle, wenn man keine Metallalkoxide verwendet, die durch ein ONLAOM-Molekül modifiziert worden sind, und gegebenenfalls ONLAOM-Moleküle, wenn man die genannten modifizierten Alkoxide verwendet, und
daß man mindestens während eines Teils des Ablaufs der Polymerisation des anorganischen Gitters (Netzes) und/oder der Trocknung oder nach der Trocknung während eines Erwärmungs- und Abkühlungszyklus ein elektrisches Feld anlegt.

9. Optische Bauteile (Formkörper), hergestellt aus einem der Materialien nach einem der Ansprüche 1 bis 7, insbesondere in Form einer dünnen Schicht.

## Claims

1. Transparent sol-gel material which has a susceptibility of the second order χ₂, consisting of an inorganic matrix containing organic molecules which have nonlinear optical properties and which are called ONLAOM, oriented in a preferential direction, characterized in that the inorganic matrix consists of a linear or cyclic chain sequence corresponding to the structure: 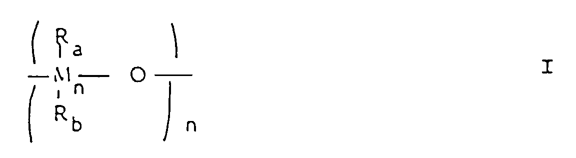 in which:
Mₙ is the germanium, silicon or tin atom, Mₙ being identical or different,
Rₐ and R_{b}, which are identical or different, are a hydrogen atom, a hydrocarbyl radical optionally substituted especially by a polymerizable double bond, hydrocarbyloxy radical, a radical -O- ONLAOM, a hydrocarbyl radical substituted by one or more molecules of ONLAOM;
or to the structure: 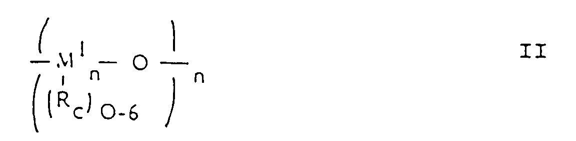 in which:
M¹ₙ is a d transition element or a p element or an f transition element, M¹ₙ being identical or different,
R_{c}, identical or different, is a hydrocarbyloxy radical or a radical -O- ONLAOM
or the material is made up of a random chain sequence of structures I and II.

2. Material according to Claim 1, characterized in that the metals Mₙ and Mₙ¹ are chosen from silicon, germanium and tin.

3. Material according to either of Claims 1 and 2, characterized in that the organic molecules which have nonlinear optical properties, ONLAOM, correspond to the following structure: 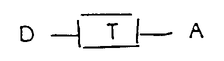 in which:
D is an electron-donor substituent - Lewis base,
A is an electron-attracting substituent - Lewis acid,
T is a system enabling electrons to be transmitted.

4. Material according to Claim 3, characterized in that the material contains between 1 and 20 % by weight of the organic molecules which have nonlinear optical properties, relative to the inorganic matrix.

5. Material according to one of Claims 1 to 4, characterized in that it is capable of being obtained according to the following process:
the following are brought into contact:
a) a metallic precursor chosen from metal alkoxides or metal alkoxides modified by an ONLAOM molecule or a mixture thereof,
b) a hydrolysing solution allowing the precursor to be polymerized, in nonionic conditions,
c) a chemical modifier allowing the reactivity of the precursor to be checked,
d) optionally complexing agents or grafting agents,
e) organic molecules which have nonlinear optical properties ONLAOM when metal alkoxides modified with a molecule of ONLAOM are not employed and optionally ONLAOMs when the said modified alkoxides are employed,
and in that an electrical field is applied during at least a part of the process of polymerization of the inorganic lattice and/or of drying, or after the drying during a heating and cooling cycle.

6. Material according to Claim 5, characterized in that the precursors correspond to the formula:
M(OR₁)_{4-a-b}RₐR_{b}
M being a silicon, germanium or tin atom,
Rₐ and R_{b} having one of the meanings according to Claim 1,
OR₁ being an identical or different hydrocarbyloxy radical and being the radical allowing the gel lattice to be formed,
and/or to the formula
M¹ ₙ(OR₁)ₘ₋ₓR_{dx}
M¹ₙ being a d transition element or a p element or an f transition element,
R_{d} having one of the meanings of R_{c} or being the chlorine or bromine atom,
m is the valency of the metal ranging from 2 to 6 and x varying from 0 to m,
OR₁ has the same meaning as above.

7. Material according to Claim 6, characterized in that the precursor is chosen from Si(OMe)₄, Zr(OnPr)₄, SiHMe(OEt)₂, Ti(OBu)₄, Al(OBu)₂(ETAC), ETAC being the chelate acetoacetic ester group.

8. Process for the preparation of a material according to one of Claims 1 to 7, characterized in that the following are brought into contact:
a) a metallic precursor chosen from metal alkoxides or metal alkoxides modified by an ONLAOM molecule or a mixture thereof,
b) a hydrolysing solution allowing the precursor to be polymerized, under nonionic conditions,
c) a chemical modifier allowing the reactivity of the precursor to be checked,
d) optionally complexing agents or grafting agents,
e) organic molecules which have nonlinear optical properties (ONLAOM) when metal alkoxides modified with a molecule of ONLAOM are not employed and optionally ONLAOMs when the said modified alkoxides are employed,
and in that an electrical field is applied during at least a part of the process of polymerization of the inorganic lattice and/or of drying, or after the drying during a heating and cooling cycle.

9. Optical components made up from one of the materials according to one of Claims 1 to 7, particularly in the form of a thin layer.
